# EUROPÄISCHE PATENTANMELDUNG

(11) **EP 0 950 587 A1**
(43) Veröffentlichungstag der Anmeldung: **20.10.1999**
(21) Anmeldenummer: 99105058.4
(22) Anmeldetag: 23.03.1999
(51) Int. Cl.: B60S 1/08

(54) **Schalteinrichtung für eine Abtaueinrichtung einer Fahrzeugscheibe**

(30) Priorität: 18.04.1998 DE 19817347
(71) Anmelder: Volkswagen Aktiengesellschaft, 38436 Wolfsburg (DE)
(72) Erfinder: Rieck, Klaus, Dipl.-Ing., 38108 Braunschweig (DE); Spallek, Michael, Dr., 34225 Baunatal (DE)

(57) **Zusammenfassung**

Die Erfindung beschreibt eine Schalteinrichtung (14) für eine Abtaueinrichtung (2) einer Fahrzeugscheibe (8), aufweisend einen Feuchtigkeitssensor (3), einen Temperatursensor (5) zur Erfassung der Lufttemperatur in der Umgebung der Fahrzeugscheibe (8) sowie einen Temperatursensor (4) zur Erfassung der Temperatur der Fahrzeugscheibe (8), wobei in der Schalteinheit (1) die Signale (9, 10, 11) des Feuchtigkeitssensors (3) und der Temperatursensoren (4, 5) zusammengeführt sind und eine Schalteinheit (1) die Signale (9, 10, 11) auf Vorliegen von Eisbildung auf der Fahrzeugscheibe (8) untersucht und daraus ggf. ein Schaltsignal (12) für die der Fahrzeugscheibe (8) zugeordnete Abtaueinrichtung (2) erzeugt. Bei dieser Schalteinrichtung (14) ist der Feuchtigkeitssensor (3) ein an dem Fahrzeug vorhandener Regensensor (3), der Feuchtigkeit direkt auf der Außenseite der Fahrzeugscheibe (8) erfaßt, und die Schalteinheit (1) schaltet bei Feststellung von Feuchtigkeit auf der Außenseite der Fahrzeugscheibe (8) durch den Regensensor (3) und gleichzeitiger Feststellung von zur Eisbildung geeigneten Temperaturen von Fahrzeugscheibe (8) und/oder Umgebung der Fahrzeugscheibe (8) durch die Temperatursensoren (4, 5) die Abtaueinrichtung (2) ein.

## Beschreibung

Die Erfindung betrifft eine Schalteinrichtung für eine Abtaueinrichtung einer Fahrzeugscheibe gemäß Oberbegriff des Anspruches 1.

Es sind eine Vielzahl von Einrichtungen bekannt, mit denen Scheiben, insbesondere Frontscheiben an Kraftfahrzeugen, abgetaut werden können bzw. ein Einfrieren verhindert werden kann. Hierzu werden üblicherweise Gebläse mit ihrer Auslaßöffnung so angeordnet, daß sie die Innenseite einer Fahrzeugscheibe mit warmer Luft beaufschlagen. Ein derartiges Gebläse kann mit einer Standheizung oder einem Latentwärmespeicher kombiniert werden, um auch z.B. den Innenraum eines Kraftfahrzeuges vorzuheizen. Weiterhin ist es insbesondere an Heckscheiben bekannt, in der Fahrzeugscheibe eingearbeitete Heizfäden durch einen Stromdurchgang zu erhitzen, auch können hierfür dünne leitfähige Beschichtungen der Fahrzeugscheibe vorgesehen werden.

Derartige Einrichtungen werden üblicherweise erst von dem Fahrzeugbenutzer in Betrieb gesetzt, wenn er eine Fahrt antreten will oder bei einer Fahrt sich die Wetterbedingungen so ändern, daß die Fahrzeugscheibe beschlägt oder sogar einzufrieren beginnt. Es werden heute schon eine Reihe von Sensorelementen eingesetzt, um den Zustand der Fahrzeugscheibe zu erkennen. Die erste Art von Sensoren erfassen den Feuchtigkeitszustand der Fahrzeugscheibe auf ihrer der Umgebung zugewandten Außenseite beispielsweise über Änderungen in der Leitfähigkeit des auf der Außenseite angeordneten Sensorelementes aufgrund von sich auf dem Sensorelement ablagernder Feuchtigkeitstropfen oder eines Feuchtigkeitsfilmes. Neben einer direkten Messung mit auf der Außenseite der Fahrzeugscheibe angeordnetem Sensorelement kann auch eine indirekte, kapazitive Messung entsprechend der EP 0 710 593 erfolgen, selbst wenn sich nur tropfenförmige Ablagerungen auf der Fahrzeugscheibe bilden. Ein anderes Meßprinzip beispielsweise gemäß der DE 43 29 188 A1, der DE 40 27 367 C1 oder der DE 41 02 146 C1 bedient sich in verschiedenen Ausgestaltungen einer optischen Messung mittels Totalreflektion innerhalb der Fahrzeugscheibe, wobei durch die Ablagerung des Flüssigkeitsfilmes eine Veränderung des Reflektionsgrades an der benetzten Außenseite der Fahrzeugscheibe eintritt und diese Änderung als Maß für die Flüssigkeitsablagerung herangezogen wird. Auch sind Durchlichtverfahren bekannt, die eine durch die Fahrzeugscheibe durchtretende Strahlung auswerten. Derartige Sensoren werden dann üblicherweise als Regensensoren eingesetzt, die beispielsweise während der Fahrt ein Signal abgeben, durch das der Scheibenwischer selbsttätig ein und wieder ausgeschaltet wird. Auch können derartige Sensoren als Verschmutzungssensoren genutzt werden, die bei starker Verschmutzung der Fahrzeugscheibe ein Signal an die Scheibenwaschanlage abgeben.

Aus der DE 39 35 563 ist darüber hinaus eine Kombination eines Feuchtigkeitssensors mit Temperatursensoren bekannt, die eine Auswertung der erfaßten Sensorsignale in Bezug auf die Gefahr der Bildung eines Flüssigkeitsfilmes und die weitergehende Gefahr des Einfrierens dieses Flüssigkeitsfilmes bei niedrigen Außentemperaturen ermöglicht. Hierzu wird an einer geeigneten Stelle des Fahrzeuges, jedoch nicht an der Fahrzeugscheibe ein Feuchtigkeitssensor angeordnet, der die relative Feuchte in der Umgebung des Fahrzeuges erfaßt. Weiterhin ist ein Temperaturfühler zur Erfassung der Umgebungstemperatur und ein Temperaturfühler zur Erfassung der Temperatur der Fahrzeugscheibe vorgesehen, wobei die Signale aller dieser drei Sensoren in einer Regeleinheit zusammengeführt werden. Die Regeleinheit berechnet aus der relativen Feuchte in der Umgebung des Fahrzeuges und den bei-den Temperaturen die Gefahr eines Einfrierens der Fahrzeugscheibe und steuert eine Heizeinrichtung in der Fahrzeugscheibe derart an, daß eine Eisbildung vorab verhindert wird. Zwar lassen sich bei dieser Einrichtung Standardsensoren verwenden, doch ist die Erfassung des Zustandes der Fahrzeugscheibe nur sehr unbefriedigend möglich, da es sich um eine indirekte Schätzung der Feuchtigkeit der Fahrzeugscheibe handelt, da der Feuchtigkeitssensor nicht in oder an der Fahrzeugscheibe selbst angeordnet ist. Hierdurch wird die Regeleinrichtung in vielen Fällen eine Heizung der Fahrzeugscheibe auch dann vornehmen, wenn eine Eisbildung zwar aufgrund der Umgebungsbedingungen grundsätzlich denkbar ist, ein Feuchtigkeitsbelag sich auf der Fahrzeugscheibe aber noch gar nicht oder nicht in relevantem Maß gebildet hat.

Es ist deshalb Aufgabe der vorliegenden Erfindung, eine Schalteinrichtung für eine Abtaueinrichtung einer Fahrzeugscheibe insbesondere von Kraftfahrzeugen vorzuschlagen, mit der mit einfachen Mitteln eine genaue Erfassung des Feuchtigkeitszustandes erfolgen sowie der Gefahr einer Bildung von Eis auf der Außenseite der Fahrzeugscheibe erfaßt werden kann und zuverlässig Maßnahmen gegen eine Eisbildung eingeleitet werden können.

Die Lösung dieser Aufgabe ergibt sich aus den kennzeichnenden Merkmalen des Anspruches 1 in Zusammenwirken mit den Merkmalen des Oberbegriffes. Die Unteransprüche beschreiben bevorzugte Weiterbildungen.

Die Erfindung geht aus von einer Schalteinrichtung für eine Abtaueinrichtung einer Fahrzeugscheibe, aufweisend einen Feuchtigkeitssensor, einen Temperatursensor zur Erfassung der Lufttemperatur in der Umgebung der Fahrzeugscheibe sowie einen Temperatursensor zur Erfassung der Temperatur der Fahrzeugscheibe, wobei in einer Schalteinheit die Signale des Feuchtigkeitssensors und der Temperatursensoren zusammengeführt sind und die Schalteinheit die Signale auf Vorliegen von Eisbildung auf der Fahrzeugscheibe untersucht und daraus ggf. ein Schaltsignal für die der Fahrzeugscheibe zugeordnete Abtaueinrichtung erzeugt. Eine derart gattungsgemäße Schalteinrichtung wird dadurch weitergebildet, daß der Feuchtigkeitssensor ein an dem Fahrzeug vorhandener Regensensor ist, der Feuchtigkeit direkt auf der Außenseite der Fahrzeugscheibe erfaßt, und daß die Schalteinheit bei Feststellung von Feuchtigkeit auf der Außenseite der Fahrzeugscheibe durch den Regensensor und gleichzeitiger Feststellung von zur Eisbildung geeigneten Temperaturen von Fahrzeugscheibe und/oder Umgebung der Fahrzeugscheibe durch die Temperatursensoren die Abtaueinrichtung einschaltet. Durch die Nutzung eines vorteilhafterweise an dem Fahrzeug ohnehin schon vorhandenen Regensensors, der nach grundsätzlich bekannte Meßmethoden zur Erfassung der Feuchtigkeit auf z.B. Außenseite der Frontscheibe des Fahrzeuges dient, kann erreicht werden, daß bei Temperaturen der Feuchtigkeit auf der Fahrzeugscheibe nahe des Gefrierpunktes auch schon eine nur geringe Bildung von Eisschichten aufgrund der Feuchtigkeit kurz vor der Eisbildung erkannt wird und damit ein Einschalten der Abtaueinrichtung auch erst dann erfolgt, wenn sich gerade Eis bilden könnte. Hierzu wird das Signal über den Feuchtigkeitszustand der Fahrzeugscheibe in der Schalteinheit mit den Signalen der Temperatur in der Umgebung des Fahrzeuges bzw. der Fahrzeugscheibe und/oder der Temperatur der Fahrzeugscheibe selbst zusammengeführt und ausgewertet, wodurch eine weitere Erhöhung der Genauigkeit bei der Erfassung von Eisbildung erzielt werden kann. Es wird dadurch verhindert, daß zwar bei unter dem Gefrierpunkt liegenden Temperaturen von Fahrzeugscheibe und/oder Umgebung bei gleichzeitig aber trockener Fahrzeugscheibe die Abtaueinrichtung eingeschaltet wird. Ebenso wird der umgekehrte Fall einer vorliegenden Feuchtigkeit auf der Außenseite der Fahrzeugscheibe bei gleichzeitig noch ausreichend über dem Gefrierpunkt liegender Temperatur der Fahrzeugscheibe berücksichtigt.

Von besonderem Vorteil ist es, wenn der Regensensor und die Temperatursensoren ständig den Feuchtigkeitszustand der Fahrzeugscheibe bzw. die Temperaturbedingungen an der Fahrzeugscheibe und/oder in der Umgebung des Fahrzeuges überwachen. Hierdurch wird kontinuierlich der jeweilige Zustand der Fahrzeugscheibe erfaßt und es kann beispielsweise zusätzlich auch aus Art und Geschwindigkeit von Veränderungen auf die Wahrscheinlichkeit der Bildung von Eis geschlossen werden.

In einer anderen Weiterbildung können der Regensensor und die Temperatursensoren in vorgebbaren Zeitabständen den Feuchtigkeitszustand der Fahrzeugscheibe bzw. die Temperaturbedingungen an der Fahrzeugscheibe und/oder in der Umgebung des Fahrzeuges überwachen. Hierdurch wird die Möglichkeit zur Durchführung eines derartigen Meßzyklus' kombiniert mit der Anpassung der Abstände zwischen aufeinanderfolgenden Meßzyklen, da nur in seltenen Fällen ein plötzliches Umschlagen der Temperatur- und Feuchtigkeitsbedingungen an der Fahrzeugscheibe auftreten wird. In weiterer Ausgestaltung können die vorgebbaren Zeitabstände abhängig von der Temperatur der Fahrzeugscheibe und/oder der Umgebungstemperatur automatisch angepaßt werden, je nachdem wie wahrscheinlich eine Eisbildung bei den erfaßten Bedingungen am oder in der Umgebung des Fahrzeuges ist. Somit können bei Bedingungen nahe an der möglichen Eisbildung die Abstände wesentlich kürzer gehalten werden, um schon die erste Eisbildung zu erfassen, wohingegen bei unkritischen Bedingungen die Zeitabstände vergrößert werden können.

In einer vorteilhaften Weiterbildung können Regensensor und Temperatursensoren sowie Schalteinheit und Abtaueinrichtung auch im Nichtbetriebszustand des Fahrzeuges in einen aktiven Standby-Betrieb geschaltet sein. Hierbei ist es möglich, beispielsweise auch zeitgesteuert abhängig von der Tageszeit für ein Freihalten der Fahrzeugscheibe von Eis zu sorgen, selbst wenn das Fahrzeug selbst gerade nicht benutzt wird. Dies kann deshalb vorteilhaft sein, da eine Vermeidung von Eisbildung durch frühzeitiges Abtauen schon geringer Eisschichten wesentlich energiesparender durchführbar ist als das Abtauen dicker Eisschichten erst bei Inbetriebnahme des Fahrzeuges. Beispielsweise kann auch während einer frostigen Nacht oder während längerer Fahrtpausen ständig die Fahrzeugscheibe eisfrei gehalten werden, so daß der Benutzer bei Abfahrt eine eisfreie Fahrzeugscheibe vorfindet.

Von besonderen Vorteil ist es, wenn die Schalteinheit nach einer vorgebbaren Betriebszeit der Abtaueinrichtung die Scheibenwischer einschaltet, um abgetautes Eis von der Außenseite der Fahrzeugscheibe zu entfernen. Hierdurch wird dafür gesorgt, daß abgetaute Feuchtigkeit nicht durch ständige Erhitzung der Fahrzeugscheibe an einem erneuten Gefrieren gehindert werden muß, sondern daß die Feuchtigkeit zumindestens von den wichtigen Bereichen der Fahrzeugscheibe entfernt wird und die Fahrzeugscheibe erst bei erneuter Bildung von neuem Eis wieder kurzzeitig abgetaut werden muß. Hierzu können beispielsweise die Scheibenwischer ein oder zwei Wischzyklen ausführen, um abgetautes Eis von der Außenseite der Fahrzeugscheibe zu entfernen.

In weiterer Ausgestaltung kann die Wiederausschaltung der Abtaueinrichtung zeitgesteuert erfolgen, also anhand von Erfahrungswerten für die notwendige Betriebszeit der Abtaueinrichtung zum Abtauen gefrorener Feuchtigkeit.

In einer anderen Ausgestaltung kann die Wiederausschaltung der Abtaueinrichtung anhand von Signalen des Temperatursensors an der Fahrzeugscheibe und/oder des Feuchtigkeitssensors erfolgen, wodurch die tatsächlich notwendige Betriebszeit und damit der recht beträchtliche Energiebedarf der Abtaueinrichtung an die tatsächlich an der Fahrzeugscheibe vorliegenden Verhältnisse angepaßt werden kann. Insbesondere für den von einer Batterie gespeisten Betrieb der Abtaueinrichtung z.B. während Betriebspausen des Fahrzeuges lassen sich hierdurch wesentliche Energieeinsparungen und damit eine längerdauernde Funktionsfähigkeit der Abtaueinrichtung erzielen.

Besonders kostengünstig läßt sich die Funktion des Abtauens erzielen, wenn die Temperatursensoren und der Feuchtigkeitssensor an dem Fahrzeug auch für andere Zwecke ohnehin schon vorhandene Sensoren sind, die zusätzlich zu ihren normalen Funktionen Signale für die Schalteinheit bereitstellen können.

Eine besonders vorteilhafte Ausbildung der erfindungsgemäßen Schalteinrichtung zeigt die Zeichnung.

Es zeigt:

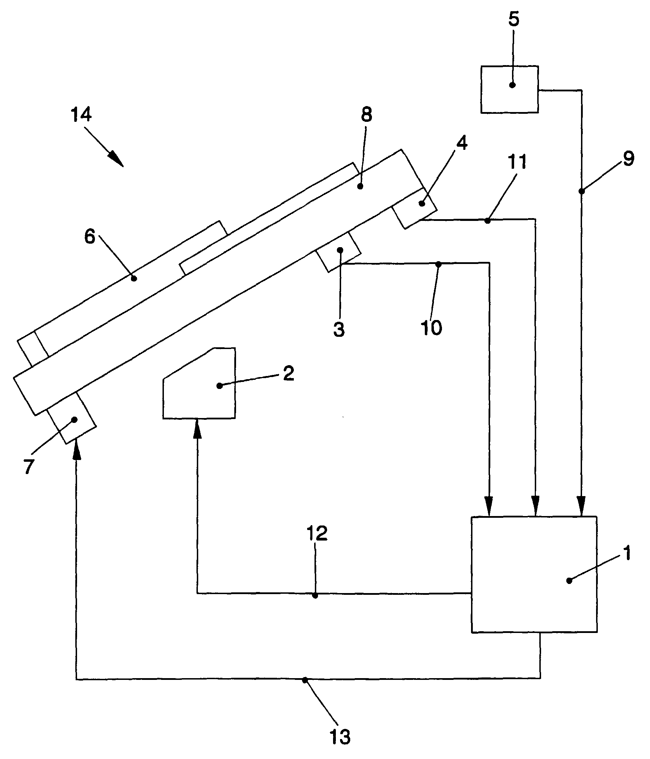

- Fig. 1: einen prinzipiellen Aufbau einer erfindungsgemäßen Schalteinrichtung an einer Fahrzeugscheibe

Die Figur 1 zeigt eine insgesamt mit 14 bezeichnete erfindungsgemäße Schalteinrichtung an einer Fahrzeugscheibe 8, die beispielsweise an einem nicht weiter dargestellten Kraftwagen angeordnet ist. An der Fahrzeugscheibe 8 ist in grundsätzlich bekannter Weise ein Regensensor 3 angeordnet, mit dem auf der Außenseite der Fahrzeugscheibe 8 sich befindende Feuchtigkeit detektiert werden kann. Hierzu können verschiedene, dem Fachmann vertraute Meßprinzipien zum Einsatz kommen, die in diesem Zusammenhang nicht weiter von Bedeutung sind und daher auch nicht näher erläutert werden. Der Regensensor 3 kann wie dargestellt auf der Innenseite der Fahrzeugscheibe 8 angeordnet sein, wobei seine Anbringung im wesentlichen vom verwendeten Meßprinzip abhängt.

In der Figur 1 benachbart zum Regensensor 3, in der Praxis aber an jedem Bereich der Fahrzeugscheibe 8 denkbar, ist ein Temperatursensor 4 angeordnet, mit dem die Temperatur der Fahrzeugscheibe 8 am günstigsten nahe der Außenseite der Fahrzeugscheibe 8 erfaßt werden kann. Des weiteren ist ein an einer beliebigen Stelle des Fahrzeuges anzuordnender Temperatursensor 5 angedeutet, mit dem sich die Umgebungstemperatur des Fahrzeuges erfassen läßt. Beispielsweise könnte dieser Temperatursensor 5 im Dachbereich oder dgl. angeordnet werden. Beide Temperatursensoren 4, 5 können handelsübliche Sensoren sein, die nach einem beliebigen Meßprinzip die jeweilige Temperatur erfassen.

Die Signale 10 des Regensensors 3 sowie die Signale 9, 11 der beiden Temperatursensoren 4, 5 werden an eine Schalteinheit 1 weitergeleitet, die sich beispielsweise im Bereich der Bordelektrik anordnen läßt. Diese Schalteinheit 1 wertet die Signale 9, 10, 11 in noch weiter erläuterter Weise daraufhin aus, ob sich auf der Außenseite der Fahrzeugscheibe 8 Eis bilden kann.

Stellt die Schalteinheit 1 das Vorliegen von Eis auf der Außenseite der Fahrzeugscheibe 8 fest oder könnte sich in unmittelbarer Zukunft derartiges Eis bilden, so kann die Schalteinheit 1 ein Schaltsignal 12 an eine Abtaueinrichtung 2 abgeben, die in der Ausführungsform der Figur 1 beispielsweise als Gebläse angedeutet ist. Es kann sich selbstverständlich um jede andere, aus dem Bereich der Fahrzeugtechnik bekannte Abtaueinrichtung 2 handeln. Aufgrund des Schaltsignals 12 der Schalteinheit 1 beginnt die Abtaueinrichtung 2 zu arbeiten und erwärmt beispielsweise durch Warmluft von innen die Fahrzeugscheibe 8, wodurch sich die Temperatur der Fahrzeugscheibe 8 erhöht und eventuell gebildetes Eis sich sofort wie-der verflüssigt. Diese Feuchtigkeit kann dann in einem zweiten Schritt dadurch von der Fahrzeugscheibe 8 entfernt werden, daß die Schalteinheit 1 zeitgesteuert oder auch aufgrund von Signalen 10, 11 von Regensensor 3 und/oder Temperatursensor 4 durch ein Schaltsignal 13 an den Scheibenwischermotor 7 die Scheibenwischer 6 betätigt und damit die Feuchtigkeit von den wesentlichen Teilen der Fahrzeugscheibe 8 entfernt. Nach einer kurzzeitigen Betätigung der Scheibenwischer 6 können diese wieder abgeschaltet werden. Auch die Abtaueinrichtung 2 kann nach der Befreiung der Fahrzeugscheibe 8 zeitgesteuert oder aufgrund von Signalen 10, 11 der Sensoren 3, 4 wieder abgestellt werden.

Das Schaltverhalten der Schalteinheit 1 kann dabei aufgrund der genauen Erfassung der Temperaturen an Fahrzeugscheibe 8 und Umgebung sowie der genauen Erfassung von Feuchtigkeit auf der Außenseite der Fahrzeugscheibe 8 genau der sich bildenden Feuchtigkeit auf der Fahrzeugscheibe 8 angepaßt werden. Somit ist erreichbar, daß schon bei nur beginnender Bildung von Feuchtigkeit die Abtaueinrichtung 2 betätigt wird, die Fahrzeugscheibe 8 sich dadurch erwärmt und durch die Scheibenwischer 6 die Feuchtigkeit abgeführt wird, so daß sich keine dicken Eisschichten bilden können, die nur durch energieintensive Erwärmung der Fahrzeugscheibe 8 wieder zu entfernen sind.

Besonders vorteilhaft ist es auch, wenn die Schalteinrichtung 14 auch bei einem Abstellen des Fahrzeuges in erfindungsgemäßer Weise weiter arbeitet, um für den Betrieb des Fahrzeuges die Fahrzeugscheibe 8 eisfrei zu halten. Dies kann beispielsweise in Betriebspausen oder auch über Nacht erfolgen und in Form einer Standby-Schaltung für alle Komponenten der Schalteinrichtung 14 realisiert sein, die unabhängig von der Zündstellung des Fahrzeuges einschaltbar ist.

Auch kann schon kurz vor den eigentlichen Entstehen von Eis auf der Fahrzeugscheibe 8 durch nur kurzzeitigen Betrieb der Abtaueinrichtung 2 die Feuchtigkeit wieder erwärmt und somit aus dem kritischen Temperaturbereich heraus gehalten werden.

### BEZUGSZEICHENLISTE

- 1: Schalteinheit
- 2: Abtaueinrichtung
- 3: Regensensor
- 4: Temperatursensor für Fahrzeugscheibe
- 5: Temperatursensor für Umgebungstemperatur
- 6: Scheibenwischer
- 7: Scheibenwischermotor
- 8: Fahrzeugscheibe
- 9: Signal Temperatursensor für Umgebungstemperatur
- 10: Signal Regensensor
- 11: Signal Temperatursensor für Fahrzeugscheibe
- 12: Schaltsignal Abtaueinrichtung
- 13: Schaltsignal Scheibenwischermotor
- 14: Schalteinrichtung

## Patentansprüche

1. Schalteinrichtung (14) für eine Abtaueinrichtung (2) einer Fahrzeugscheibe (8), aufweisend einen Feuchtigkeitssensor (3), einen Temperatursensor (5) zur Erfassung der Lufttemperatur in der Umgebung der Fahrzeugscheibe (8) sowie einen Temperatursensor (4) zur Erfassung der Temperatur der Fahrzeugscheibe (8), wobei in einer Schalteinheit (1) die Signale (9, 10, 11) des Feuchtigkeitssensors (3) und der Temperatursensoren (4, 5) zusammengeführt sind und die Schalteinheit (1) die Signale (9, 10, 11) auf Vorliegen von Eisbildung auf der Fahrzeugscheibe (8) untersucht und daraus ggf. ein Schaltsignal (12) für die der Fahrzeugscheibe (8) zugeordnete Abtaueinrichtung (2) erzeugt,
dadurch gekennzeichnet, daß
der Feuchtigkeitssensor (3) ein an dem Fahrzeug vorhandener Regensensor (3) ist, der Feuchtigkeit direkt auf der Außenseite der Fahrzeugscheibe (8) erfaßt, und daß die Schalteinheit (1) bei Feststellung von Feuchtigkeit auf der Außenseite der Fahrzeugscheibe (8) durch den Regensensor (3) und gleichzeitiger Feststellung von zur Eisbildung geeigneten Temperaturen von Fahrzeugscheibe (8) und/oder Umgebung der Fahrzeugscheibe (8) durch die Temperatursensoren (4, 5) die Abtaueinrichtung (2) einschaltet.

2. Schalteinrichtung (14) nach Anspruch 1, dadurch gekennzeichnet, daß der Regensensor (3) und die Temperatursensoren (4, 5) ständig den Feuchtigkeitszustand der Fahrzeugscheibe (8) bzw. die Temperaturbedingungen an der Fahrzeugscheibe (8) und/oder in der Umgebung des Fahrzeuges überwachen.

3. Schalteinrichtung (14) nach Anspruch 1, dadurch gekennzeichnet, daß der Regensensor (3) und die Temperatursensoren (4, 5) in vorgebbaren Zeitabständen den Feuchtigkeitszustand der Fahrzeugscheibe (8) bzw. die Temperaturbedingungen an der Fahrzeugscheibe (8) und/oder in der Umgebung des Fahrzeuges überwachen.

4. Schalteinrichtung (14) nach Anspruch 3, dadurch gekennzeichnet, daß die vorgebbaren Zeitabstände abhängig von der Temperatur der Fahrzeugscheibe (8) und/oder der Umgebungstemperatur automatisch angepaßt werden, je nachdem wie wahrscheinlich eine Eisbildung bei den erfaßten Bedingungen an der Fahrzeugscheibe (8) oder in der Umgebung des Fahrzeuges ist.

5. Schalteinrichtung (14) nach einem der vorstehenden Ansprüche, dadurch gekennzeichnet, daß Regensensor (3) und Temperatursensoren (4, 5) sowie Schalteinheit (1) und Abtaueinrichtung (2) auch im Nichtbetriebszustand des Fahrzeuges in einen aktiven Standby-Betrieb geschaltet sind.

6. Schalteinrichtung (14) nach einem der vorstehenden Ansprüche, dadurch gekennzeichnet, daß die Schalteinheit (1) nach einer vorgebbaren Betriebszeit der Abtaueinrichtung (2) die Scheibenwischer (6) einschaltet, um abgetautes Eis von der Außenseite der Fahrzeugscheibe (8) zu entfernen.

7. Schalteinrichtung (14) nach Anspruch 6, dadurch gekennzeichnet, daß die Scheibenwischer (6) ein oder zwei Wischzyklen ausführen, um abgetautes Eis von der Außenseite der Fahrzeugscheibe (8) zu entfernen.

8. Schalteinrichtung (14) nach einem der vorstehenden Ansprüche, dadurch gekennzeichnet, daß die Wiederausschaltung der Abtaueinrichtung (2) zeitgesteuert erfolgt.

9. Schalteinrichtung (14) nach einem der Ansprüche 1 bis 7, dadurch gekennzeichnet, daß die Wiederausschaltung der Abtaueinrichtung (2) anhand von Signalen des Temperatursensors (4) an der Fahrzeugscheibe (8) und/oder des Feuchtigkeitssensors (3) erfolgt.

10. Schalteinrichtung (14) nach einem der vorstehenden Ansprüche, dadurch gekennzeichnet, daß die Temperatursensoren (4,5) und der Feuchtigkeitssensor (3) an dem Fahrzeug auch für andere Zwecke schon vorhandene Sensoren sind:
